# EUROPEAN PATENT APPLICATION

(11) **EP 1 246 439 A1**
(43) Date of publication of application: **02.10.2002**
(21) Application number: 01440087.3
(22) Date of filing: 26.03.2001
(51) Int. Cl.: H04M 3/493, G06F 17/30, H04Q 11/04, H04L 29/06, G10L 15/26

(54) **System and method for voice controlled internet browsing using a permanent D-channel connection**

(71) Applicant: ALCATEL, 75008 Paris (FR)
(72) Inventor: Kopp, Dieter, Dipl.-Ing., 75428 Illingen (DE); Sienel, Jürgen, Dipl-Ing., 71229 Leonberg (DE)
(74) Representative: van Bommel, Jan Peter

(57) **Abstract**

Known systems comprising a terminal for preprocessing signals and a network-unit for final processing preprocessed signals which both are coupled via wired connection, need to set up a channel each time said pre/final-processing takes place, although sometimes, for example in an Internet environment, there is no further information flowing into the opposite direction. And after the final processing has taken place, sometimes the channel is no longer used, and then needs to be finished. This all is very inefficient. By introducing the always-on channel, for transmitting said preprocessed signals from terminal to network-unit, like for example an always-on / dynamic ISDN channel, the system will not require a channel to be set up, and will not require such a channel to be finished, each time the preprocessing and final processing have taken place. This is much more efficient, especially for voice controlled browsing in an adjustable charging/billing environment.

## Description

The invention relates to a system comprising a terminal for preprocessing signals and a network-unit for final processing preprocessed signals, which terminal and network-unit each comprise a line-interface coupled to a wired connection.

Such a system is known in general, with the terminal being for example a digital (ISDN, DECT) or analog terminal like a telephone or a screenphone or a pc or a combination of a basestation + wireless handset etc., and with the network-unit being for example a switch, a router, a bridge, a gateway etc. The preprocessing and final processing are well known technologies from Distributed Speech Recognition systems (DSR systems).

Such a system is disadvantageous, inter alia, due to needing to set up a channel via the wired connection to allow the final processing to take place, although said final processing sometimes, for example in an Internet environment, will not always result in large quantities of information flowing into the opposite direction. And after the final processing has taken place, sometimes the channel is used for further purposes, and sometimes it is not, and then needs to be finished. This all is very inefficient.

It is an object of the invention, inter alia, to provide a system described in the preamble, which is more efficient.

Thereto, the system according to the invention is characterised in that the wired connection comprises an always-on channel for transmitting said preprocessed signals from terminal to network-unit via said always-on channel.

By introducing the always-on channel, like for example an always-on ISDN D-channel, the preprocessing, the transmission of preprocessed signals and the final processing of preprocessed signals will not require a channel to be set up, and will not require such a channel to be finished, each time preprocessing and final processing have taken place.

The invention is based on the insight, inter alia, that preprocessing and final processing increase the efficiency of a connection, where setting up and finishing channels decrease the efficiency of such a connection.

The invention solves the problem, inter alia, of providing a system which is more efficient.

The invention further relates to a terminal with a preprocessor for preprocessing signals for use in a system comprising said terminal and a network-unit for final processing preprocessed signals, which terminal comprises a line-interface to be coupled via a wired connection to a line-interface of said network-unit.

The terminal according to the invention is characterised in that the wired connection comprises an always-on channel, with the terminal comprising a transmitter located between said preprocessor and said line-interface for transmitting said preprocessed signals to the network-unit.

A first embodiment of the terminal according to the invention is characterised in that the signals comprise vocal signals, with the terminal comprising a browser for voice controlled browsing.

By introducing the preprocessing and final processing of vocal signals, and by introducing the browser, voice controlled browsing has become possible.

A second embodiment of the terminal according to the invention is characterised in that a use of the wired connection (like the transmitting of preprocessed signals) involves indicatable costs to be charged, with the terminal comprising a generator for generating a cost indication signal.

By introducing the generator, the terminal can now indicate, via the indication signal, which amount of costs is considered to be acceptable or not, for example.

The invention further relates to a network-unit with a final processor for final processing preprocessed signals for use in a system comprising a terminal for preprocessing signals and said network-unit, which network-unit comprises a line-interface to be coupled via a wired connection to a line-interface of said terminal.

The network-unit according to the invention is characterised in that the wired connection comprises an always-on channel, with the network-unit comprising a receiver located between said line-interface and said final processor for receiving said preprocessed signals from the terminal via said always-on channel.

A first embodiment of the network-unit according to the invention is characterised in that the signals comprise vocal signals, with the network-unit comprising a recognizer and/or a browser coupled to said final processor for voice recognition and/or voice controlled browsing.

By introducing the recognizer, voice recognition has become possible for allowing voice controlled browsing, for example, via a browser in the terminal, for example, and/or via a browser in the network-unit, which browser then will be located near and/or integrated with the reognizer, preferably.

A second embodiment of the network-unit according to the invention is characterised in that a use of the wired connection (like the transmitting of preprocessed signals) involves adjustable costs to be charged, with the network-unit comprising an adjustor for adjusting a cost calculation signal.

By introducing the adjustor, the network-unit can now define, via the cost calculation, how much is charged. To make the charging dependent upon the final processing, the adjustor is to be coupled to the final processor. In addition, or alternatively, the adjustor charges dependently upon the indication signal originating from the terminal.

A third embodiment of the network-unit according to the invention is characterised in that the network-unit comprises a detector coupled to said final processor for detecting a transmission capacity necessary via the wired connection and comprises an adaptor coupled to said detector for adapting at least one channel via said wired connection for making available at least a minimum transmission capacity.

By introducing the detector and the adaptor, for example in an Internet environment, in case of a large quantity of information going to flow from network-unit to terminal, at least one channel can be adapted for making available said minimum transmission capacity. The adaptation of a channel is done by either in this channel increasing the available bandwidth, and/or by adding a further channel, for example in case of an ISDN D-channel is used for creating the always-on situation, one or both of the B-channels is/are added in case the capacity of the D-channel is insufficient.

The invention yet further relates to a method for use in combination with a system comprising a terminal for preprocessing signals and a network-unit for final processing preprocessed signals, which terminal and network-unit each comprise a line-interface coupled to a wired connection.

The method according to the invention is characterised in that the method comprises the step of transmitting said preprocessed signals from terminal to network-unit via an always-on signalling channel.

A first embodiment of the method according to the invention is characterised in that the signals comprise vocal signals, with the method comprising the steps of voice controlled browsing and voice recognition.

Further embodiments of the method according to the invention correspond with embodiments of the terminal according to the invention, and/or with embodiments of the network-unit according to the invention.

The ALCATEL patent US 5,809,464 (inventors Dieter Kopp & Heidi Hackbarth), which discloses a distributed voice recognition system, is considered to be incorporated.

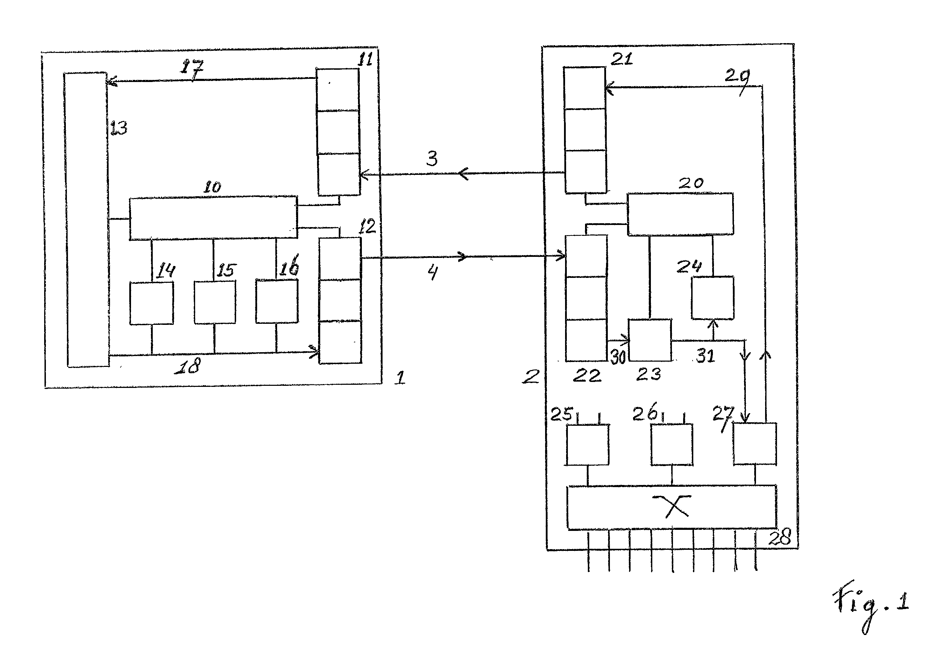

The invention will be further explained at the hand of an embodiment described with respect to a drawing, whereby
figure 1 discloses a terminal according to the invention and a network-unit according to the invention.

Terminal 1 according to the invention as shown in figure 1 comprises a processor 10 coupled via a control connection to a line interface - receiver 11 or lire 11 and via a control connection to a line interface - transmitter 12 or litra 12 and via a control connection to a man machine interface 13 or mmi 13 and via a control connection to a preprocessor 14 and via a control connection to a browser 15 and via a control connection to a generator 16. An input of litra 12 is coupled via a connection 18 to an output of mmi 13, which connection 18 is further coupled to preprocessor 14, browser 15 and generator 16. An output of lire 11 is coupled via a connection 17 to an input of mmi 13. An output of litra 12 is coupled to a wire uplink channel 4, and an input of lire 11 is coupled to a wire downlink channel 3.

Network-unit 2 according to the invention as shown in figure 1 comprises a processor 20 coupled via a control connection to a line interface transmitter 21 or litra 21 and via a control connection to a line interface receiver 22 or lire 22 and via a control connection to a final processor 23 and via a control conneciton to a recognizer/browser 24 (recognizer/browser = recognizer and/or browser). An input of lire 22 is coupled to wire uplink channel 4, and an output of litra 21 is coupled to wire downlink channel 3. An output of lire 22 is coupled via a connection 30 to an input of final processor 23, of which an output is coupled via a connection 31 to an input of splitter/combiner 27. Connection 31 is further coupled to an input of recognizer/browser 24. An output of splitter/combiner 27 is coupled via a connection 29 to an input of litra 21. An in/output of splitter/combiner 27 is coupled to a switch 28, which is further coupled to in/outputs of splitter/combiners 25 and 26.

The terminal 1 according to the invention and the network-unit 2 according to the invention as shown in figure 1 function as follows.

According to a first embodiment, a user of terminal 1 wants to perform vocal commanding like for example name dialling or dictation via a Distributed Speech Recognition system or DSR system comprising terminal 1 and network-unit 2. Thereto, according to prior art solutions, this user for example needed to dial a special telephone number or to press a key, both for setting up a special connection for allowing vocal commanding via a DSR system, which all is not too user-friendly. According to the invention, this user now has a so-called always-on connection between terminal and network-unit, like for example an always open D-channel of an ISDN connection or an always open baseband channel of an analog connection. The user can now start speaking immediately into a microphone forming part of mmi 13, which converts his audio into analog or digital speech signals, which via connection 18 are supplied to preprocessor 14, which converts said analog or digital speech signals into preprocessed signals, which via connection 18 are supplied to litra 12 comprising a transmitter (lowest block of litra 12) and comprising a line interface (highest block of litra 12). Thereby mmi 13, preprocessor 14 and litra 12 are all controlled by processor 10.

In case of the always-on channel being an ISDN D-channel, processor 10 controls litra 12 in such a way that said preprocessed signals flow via this D-channel (wire uplink channel 4) to the network-unit 2. Thereto, for example a timeslot manager (middle block of litra 12) is controlled in such a way that said preprocessed signals are inserted in certain (parts of) timeslots corresponding with the (uplink) D-channel. In case of the always-on channel being an analog baseband channel, processor 10 controls litra 12 in such a way that said preprocessed signals flow via this baseband channel (wire uplink channel 4) to the network-unit 2. Thereto, for example a modem (middle block of litra 12) is switched off, and/or filters (middle block of litra 12) are (de)activated, thereby allowing said preprocessed signals to flow via a baseband channel (wire uplink channel 4) to network-unit 2.

Via wire uplink channel 4, said preprocessed signals arrive in network-unit 2 at lire 22, which informs processor 20. In case of the always-on channel being an ISDN D-channel, processor 20 controls lire 22 in such a way that said preprocessed signals are extracted by a timeslot manager (middle block of lire 22) from certain (parts of) timeslots corresponding with the (uplink) D-channel. In case of the always-on channel being an analog baseband channel, processor 20 controls lire 22 in such a way that said preprocessed signals originating from the baseband channel (wire uplink channel 4) flow via a switched off modem (middle block of lire 22), and/or via (de)activated filters (middle block of litra 12).

Then, said preprocessed signals flow via connection 30 to final processor 23, which finally processes them, after which the finally processed signals are supplied via connection 31 to recognizer/browser 24, which recognizes the speech entered at mmi 13, and in response informs processor 20. As a result, processor 20, by controlling switch 28 via a connection not shown, will now allow name dialling, and/or by or by using a memory not shown, will now allow dictation, etc.

In case of the name dialling situation resulting in a (telephone) conversation, and in case of the dictation situation possibly requiring (more) bandwidth, this is detected by a detector (not shown in the figure but forming part of processor 20) for detecting a transmission capacity necessary via the wired connection, in response to which an adaptor (not shown in the figure but forming part of processor 20) will adapt at least one channel via said wired connection for making available at least a minimum transmission capacity. This will result in one of three options:
- firstly, when extra bandwidth is not available and/or when said user is not authorised to use more bandwidth (identification for example being done via voice recognition or a pin code), the conversation and dictation must take place via said always-on channel;
- secondly, when extra bandwidth is available and when said user is authorised to use it, the extra bandwidth is activated, for example under control of processor 20. In case of the always-on channel being an ISDN D-channel, processor 20 controls litra 21 and lire 22 in such a way that for example a B-channel is activated. Thereto, for example a timeslot manager (middle block of litra 21 and lire 22) is controlled in such a way that signals are inserted in certain (parts of) timeslots corresponding with the B-channel. In case of the always-on channel being an analog baseband channel, processor 20 controls litra 21 and lire 22 in such a way that signals flow via a higher frequency band (non-baseband channel). Thereto, for example a modem (middle block of litra 21 and lire 22) is switched on, and/or filters (middle block of litra 21 and lire 22) are (de)activated, thereby allowing said signals to flow via the higher frequency band;
- thirdly, in case of a so-called dynamic ISDN situation, one or both of the B-channels are added to the D-channel, etc.

For each one of said three options and for both the ISDN situation and the analog situation, either terminal 1 is informed or must detect what is going on, and respond correspondingly.

According to a second embodiment, a user of terminal 1 wants to perform voice controlled browsing via a Distributed Speech Recognition system or DSR system comprising terminal 1 and network-unit 2. Thereto, this user is watching a screen forming part of mmi 13 and looking at a WAP or HTML page. According to prior art solutions, this user used a connection set up via an Internet Access Provider and/or an Internet Service Provider, which connection was charged/billed per second/minute etc., which all is not too user-friendly. According to the invention, this user now has a so-called always-on connection between terminal and network-unit, like for example an always open D-channel of an ISDN connection or an always open baseband channel of an analog connection. The user can now start speaking immediately into a microphone forming part of mmi 13, which converts his audio into analog or digital speech signals, which via connection 18 are supplied to preprocessor 14, which converts said analog or digital speech signals into preprocessed signals, which via connection 18 are supplied to litra 12 comprising a transmitter (lowest block of litra 12) and comprising a line interface (highest block of litra 12). Thereby mmi 13, preprocessor 14, browser 15 and litra 12 are all controlled by processor 10.

In case of the always-on channel being an ISDN D-channel, processor 10 controls litra 12 in such a way that said preprocessed signals flow via this D-channel (wire uplink channel 4) to the network-unit 2. Thereto, for example a timeslot manager (middle block of litra 12) is controlled in such a way that said preprocessed signals are inserted in certain (parts of) timeslots corresponding with the (uplink) D-channel. In case of the always-on channel being an analog baseband channel, processor 10 controls litra 12 in such a way that said preprocessed signals flow via this baseband channel (wire uplink channel 4) to the network-unit 2. Thereto, for example a modem (middle block of litra 12) is switched off, and/or filters (middle block of litra 12) are (de)activated, thereby allowing said preprocessed signals to flow via a baseband channel (wire uplink channel 4) to network-unit 2.

Via wire uplink channel 4, said preprocessed signals arrive in network-unit 2 at lire 22, which informs processor 20. In case of the always-on channel being an ISDN D-channel, processor 20 controls lire 22 in such a way that said preprocessed signals are extracted by a timeslot manager (middle block of lire 22) from certain (parts of) timeslots corresponding with the (uplink) D-channel. In case of the always-on channel being an analog baseband channel, processor 20 controls lire 22 in such a way that said preprocessed signals originating from the baseband channel (wire uplink channel 4) flow via a switched off modem (middle block of lire 22), and/or via (de)activated filters (middle block of litra 12).

Then, said preprocessed signals flow via connection 30 to final processor 23, which finally processes them, after which the finally processed signals are supplied via connection 31 to recognizer/browser 24, which recognizes the speech (for browsing) entered at mmi 13, and in response informs processor 20. Thereby, at least two scenario's are possible. According to a first scenario, the browser function (WAP browser or HTML browser) in recognizer/browser 24 is used, for converting the finally processed signals into browser signals. According to a second scenario, from the recognized speech control information is extracted by processor 20, which control information is sent back to browser 15 (WAP browser or HTML browser) in terminal 1 (for example via at least one of at least three options to be discussed later), which browser 15 converts this control information into browser signals, which are to be sent to network-unit 2 as soon as a new (WAP or HTML) page is required. Of course both scenario's could be (partly) combined.

As a result, processor 20, by controlling switch 28 via a connection not shown, will now allow voice controlled browsing, by using said browser signals for defining/contacting a URL etc.

In case of the browsing possibly requiring (more) bandwidth, for example for sending a new WAP or HTML page to terminal 1, this is detected by a detector (not shown in the figure but forming part of processor 20) for detecting a transmission capacity necessary via the wired connection, in response to which an adaptor (not shown in the figure but forming part of processor 20) will adapt at least one channel via said wired connection for making available at least a minimum transmission capacity. This will result in one of three options:
- firstly, when extra bandwidth is not available and/or when said user is not authorised to use more bandwidth (identification for example being done via voice recognition or a pin code), the conversation and dictation must take place via said always-on channel;
- secondly, when extra bandwidth is available and when said user is authorised to use it, the extra bandwidth is activated, for example under control of processor 20. In case of the always-on channel being an ISDN D-channel, processor 20 controls litra 21 and lire 22 in such a way that for example a B-channel is activated. Thereto, for example a timeslot manager (middle block of litra 21 and lire 22) is controlled in such a way that signals are inserted in certain (parts of) timeslots corresponding with the B-channel. In case of the always-on channel being an analog baseband channel, processor 20 controls litra 21 and lire 22 in such a way that signals flow via a higher frequency band (non-baseband channel). Thereto, for example a modem (middle block of litra 21 and lire 22) is switched on, and/or filters (middle block of litra 21 and lire 22) are (de)activated, thereby allowing said signals to flow via the higher frequency band;
- thirdly, in case of a so-called dynamic ISDN situation, one or both of the B-channels are added to the D-channel, etc.

For each one of said three options and for both the ISDN situation and the analog situation, either terminal 1 is informed or must detect what is going on, and respond correspondingly.

According to a third embodiment, indicatable costs and/or adjustable costs are involved when using the wired connection. A user of terminal 1 is for example performing voice controlled browsing via a Distributed Speech Recognition system or DSR system comprising terminal 1 and network-unit 2, and is watching a screen forming part of mmi 13 and looking at a WAP or HTML page. This user now has a so-called always-on connection between terminal and network-unit, like for example an always open D-channel of an ISDN connection or an always open baseband channel of an analog connection. The user is speaking into a microphone forming part of mmi 13, which converts his audio into analog or digital speech signals, which via connection 18 are supplied to preprocessor 14, which converts said analog or digital speech signals into preprocessed signals, which via connection 18 are supplied to litra 12 comprising a transmitter (lowest block of litra 12) and comprising a line interface (highest block of litra 12), etc. as already described for the second embodiment. In addition, the following takes place.

According to a first option, the user wants to give an indication of the costs still acceptable. Thereto, this user uses mmi 13 by for example speaking into the microphone or pressing the keys of the keyboard, which by mmi 13 is converted into signals flowing via connection 18 to generator 16. In response, generator 16 generates a cost indication signal which is supplied via connection 18 to litra 12 comprising a transmitter (lowest block of litra 12) and comprising a line interface (highest block of litra 12) etc. In network-unit 2, for example a detector (not shown in the figure but for example forming part of processor 20) detects this cost indication signal, and in response for example controls an amount of information destined for terminal 1 not to exceed a certain limit possibly per time-interval and/or a bandwidth and/or transmission capacity not to exceed a certain limit etc.

According to a second option, the user is voice controlled browsing, and receiving WAP or HTML pages, which arrive in terminal 1 at lire 11, in response to which processor 10 is informed, which then informs generator 16. In response generator 16 generates a cost indication signal, for example depending upon the signals arrived and/or upon the channel(s) via which these signals have arrived. This cost generation signal is supplied to mmi 13 via processor 10, and as a result for example via a loudspeaker forming part of mmi 13 and/or via a display forming part of mmi 13, the user is informed about the costs involved.

According to a third option, network-unit 2 comprises an adjustor (not shown in the figure but for example forming part of processor 20) for adjusting a cost calculation signal. In combination with the cost indication signal of the first option, this cost indication signal is now just used for indicating the maximum costs possibly per time-interval, in response to which said certain limits are adjusted and/or said cost calculation signal is adjusted by said adjustor.

According to a fourth option, network-unit 2 comprises an adjustor (not shown in the figure but for example forming part of processor 20) for adjusting a cost calculation signal. In combination with the cost indication signal of the second option, this cost indication signal now corresponds with said cost calculation signal, which is sent from network-unit 2 to terminal 1 and which is adjusted by said adjustor for example in response to an adjustment signal originating from an other part of the network and for example being related to the WAP or HTML pages (to be) sent to terminal 1 via network-unit 2.

All embodiments are just embodiments and do not exclude other embodiments not shown and/or described. All alternatives are just alternatives and do not exclude other alternatives not shown and/or described. Each (part of an) embodiment and/or each (part of an) alternative can be combined with any other (part of an) embodiment and/or any other (part of an) alternative. Terms like "in response to K" and "in dependence of L" and "for doing M" do not exclude that there could be a further "in response to N" and a further "in dependence of ○" and a further "for doing P" etc.

The figure shown is just an example, many other figures will be possible without departing from the scope of this invention. For example the wire uplink channel 4 and the wire downlink channel 3 form part of one wire or of two or more wires, with these wires being electrical, optical etc. Preprocessor 14, browser 15 and generator 16 can be 100% hardware, 100% software or a mixture of both, and should therefore to be looked at as preprocessing, browsing and generation functions. Final processor 23 and recognizer/browser 24 can be 100% hardware, 100% software or a mixture of both, and should therefore to be looked at as final processing and recognizing/browsing (recognizing/browsing = recognizing and/or browsing) functions. Each two or more parts of terminal 1 can be integrated, combined, etc. and each two or more parts of network-unit 2 can be integrated, combined etc. Network-unit 2 will generally be able to deal with more than one terminal, and therefore comprises further splitter/combiners 25,26 etc. Switch 28 will be coupled to further switches, and/or to Internet Access Providers or lAPs, and/or to Internet Service Providers or ISPs. Terminal 1 for example corresponds with (a part of) a digital (ISDN, DECT) or analog terminal like a telephone or a screenphone or a pc or a combination of a basestation + wireless handset (in which case, for example, mmi 13 will coupled wirelessly to the other parts of terminal 1, and/or (parts of) lire 11 and litra 12 will be coupled wirelessly to the other parts of terminal 1). Network-unit 2 for example corresponds with (a part of) a switch, a router, a bridge, a gateway etc. The preprocessing and final processing are well known technologies from Distributed Speech Recognition systems (DSR systems). Compared to prior art systems, the invention of course not just increases the efficiency, but also the user-friendlyness. A method for doing to business is not to be excluded from this invention, like for example a method for offering voice controlled browsing and/or voice recognition for use in combination with a system comprising a terminal for preprocessing signals and a network-unit for final processing preprocessed signals, which terminal and network-unit each comprise a line-interface coupled to a wired connection, characterised in that the method comprises the step of transmitting said preprocessed signals from terminal to network-unit via an always-on signalling channel. Preferably, this method for doing business is further improved by implementing the cost calculation signal, possibly together with the cost indication signal.

## Claims

1. System comprising a terminal for preprocessing signals and a network-unit for final processing preprocessed signals, which terminal and network-unit each comprise a line-interface coupled to a wired connection, **characterised in that** the wired connection comprises an always-on channel for transmitting said preprocessed signals from terminal to network-unit via said always-on channel.

2. Terminal with a preprocessor for preprocessing signals for use in a system comprising said terminal and a network-unit for final processing preprocessed signals, which terminal comprises a line-interface to be coupled via a wired connection to a line-interface of said network-unit, **characterised in that** the wired connection comprises an always-on channel, with the terminal comprising a transmitter located between said preprocessor and said line-interface for transmitting said preprocessed signals to the network-unit via said always-on channel.

3. Terminal according to claim 1, **characterised in that** the signals comprise vocal signals, with the terminal comprising a browser for voice controlled browsing.

4. Terminal according to claim 2 or 3, **characterised in that** a use of the wired connection involves indicatable costs to be charged, with the terminal comprising a generator for generating a cost indication signal.

5. Network-unit with a final processor for final processing preprocessed signals for use in a system comprising a terminal for preprocessing signals and said network-unit, which network-unit comprises a line-interface to be coupled via a wired connection to a line-interface of said terminal, **characterised in that** the wired connection comprises an always-on channel, with the network-unit comprising a receiver located between said line-interface and said final processor for receiving said preprocessed signals from the terminal via said always-on channel.

6. Network-unit according to claim 5, **characterised in that** the signals comprise vocal signals, with the network-unit comprising a recognizer and/or browser coupled to said final processor for voice recognition and/or voice controlled browsing.

7. Network-unit according to claim 5 or 6, **characterised in that** a use of the wired connection involves adjustable costs to be charged, with the network-unit comprising an adjustor for adjusting a cost calculation signal.

8. Network-unit according to claim 5, 6 or 7, **characterised in that** the network-unit comprises a detector coupled to said final processor for detecting a transmission capacity necessary via the wired connection and comprises an adaptor coupled to said detector for adapting at least one channel via said wired connection for making available at least a minimum transmission capacity.

9. Method for use in combination with a system comprising a terminal for preprocessing signals and a network-unit for final processing preprocessed signals, which terminal and network-unit each comprise a line-interface coupled to a wired connection, **characterised in that** the method comprises the step of transmitting said preprocessed signals from terminal to network-unit via an always-on signalling channel.

10. Method according to claim 9, **characterised in that** the signals comprise vocal signals, with the method comprising the steps of voice controlled browsing and voice recognition.
